(19) Europäisches Patentamt
European Patent Office
Office européen des brevets

(11) EP 4 471 890 A1

(12) EUROPEAN PATENT APPLICATION
published in accordance with Art. 153(4) EPC

(43) Date of publication:
04.12.2024 Bulletin 2024/49

(51) International Patent Classification (IPC):
$H01M\ 4/133^{(2010.01)}$ $H01M\ 4/36^{(2006.01)}$
$H01M\ 4/38^{(2006.01)}$ $H01M\ 4/587^{(2010.01)}$
$H01M\ 4/62^{(2006.01)}$

(21) Application number: 23746643.8

(22) Date of filing: 11.01.2023

(52) Cooperative Patent Classification (CPC):
H01M 4/133; H01M 4/36; H01M 4/38; H01M 4/587;
H01M 4/62; Y02E 60/10

(86) International application number:
PCT/JP2023/000414

(87) International publication number:
WO 2023/145428 (03.08.2023 Gazette 2023/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 28.01.2022 JP 2022011841

(71) Applicant: Panasonic Intellectual Property
Management Co., Ltd.
Kadoma-shi, Osaka 571-0057 (JP)

(72) Inventors:
• HASEGAWA, Masaki
Kadoma-shi, Osaka 571-0057 (JP)
• WATANABE, Takashi
Kadoma-shi, Osaka 571-0057 (JP)
• SATO, Naomichi
Kadoma-shi, Osaka 571-0057 (JP)

(74) Representative: Eisenführ Speiser
Patentanwälte Rechtsanwälte PartGmbB
Gollierstraße 4
80339 München (DE)

(54) **NEGATIVE ELECTRODE FOR SECONDARY BATTERY AND SECONDARY BATTERY**

(57) In a negative electrode (12) for a secondary battery which is one example of an embodiment of the present invention, a negative electrode active substance layer (41) has a first active substance layer (41A) and a second active substance layer (41B). A tortuosity $\tau_2$ of the second active substance layer (41B) is smaller than a tortuosity $\tau_1$ of the first active substance layer (41A), and the B value calculated using equation 2 is equal to 1.7 to 1 divided by the A value. Equation 1: Tortuosity of negative electrode active substance layer (41) x thickness of negative electrode active substance layer (41) = A value Equation 2: Content ratio of Si-containing material to mass of active substance / A value = B value

Figure 2

EP 4 471 890 A1

# EP 4 471 890 A1

**Description**

TECHNICAL FIELD

The present disclosure relates to a negative electrode for a secondary battery and a secondary battery using this negative electrode.

BACKGROUND ART

A secondary battery such as a lithium-ion battery is applied for on-board use, power storage use, and the like, and required to have battery performance such as a high energy density, high-speed charge-discharge performance (high-rate characteristics), and good cycle characteristics. Since a negative electrode, which is a main constituent of the secondary battery, significantly affects the performance, there have been many investigations on the negative electrode. For example, Patent Literature 1 discloses a lithium-ion secondary battery comprising a positive electrode including a positive electrode active material layer having a pore tortuosity measured with a mercury porosimeter of greater than or equal to 7 and less than or equal to 60. Patent Literature 1 describes an effect that using this positive electrode exhibits good rate characteristics.

CITATION LIST

PATENT LITERATURE

PATENT LITERATURE 1: International Publication No. 2019/003835

SUMMARY

Reducing the tortuosity in the active material layer improves rate characteristics of the battery, but unfortunately decreases a filling density of active material particles to decrease a capacity per volume, and isolates the active material particles from a conductive path of the active material layer to deteriorate the battery performance. In addition, when a plurality of active materials having different properties is used, the tortuosity needs to be optimized depending on their mixing ratio. Particularly, with a negative electrode using graphite and a Si-containing material, which have largely different expansion coefficients during charge and discharge, as a negative electrode active material, the tortuosity of the active material layer significantly affects the battery performance such as high-rate characteristics.

It is an advantage of the present disclosure to provide a negative electrode in order to achieve a secondary battery having excellent high-rate characteristics.

A negative electrode for a secondary battery according to the present disclosure is a negative electrode for a secondary battery comprising: a current collector; and an active material layer formed on the current collector, wherein the active material layer has: a first active material layer formed on the current collector; and a second active material layer formed above the current collector via the first active material layer, the first active material layer and the second active material layer include graphite and a Si-containing material as an active material, a tortuosity $\tau_2$ of the second active material layer is smaller than a tortuosity $\tau_1$ of the first active material layer, and a value B calculated with the following Formula 2 by using: a content rate of the Si-containing material relative to a mass of the active material; and a value A calculated with the following Formula 1, is greater than or equal to 1.7, the tortuosity of the active material layer $\times$ a thickness of the active material layer = the value A the content rate of the Si-containing material relative to the mass of the active material / the value A = the value B

A secondary battery according to the present disclosure comprises: the above negative electrode for a secondary battery; a positive electrode; and an electrolyte.

According to the negative electrode for a secondary battery of the present disclosure, the secondary battery having excellent high-rate characteristics can be provided.

BRIEF DESCRIPTION OF DRAWING

FIG. 1 is a sectional view of a non-aqueous electrolyte secondary battery of an example of an embodiment.
FIG. 2 is a sectional view of an electrode assembly of an example of an embodiment.

DESCRIPTION OF EMBODIMENTS

As noted above, it is an important challenge to improve high-rate characteristics to enable high-speed charge and discharge in a secondary battery such as a lithium-ion battery. The high-rate characteristics of the secondary battery is improved by setting a negative electrode active material layer to have a multilayer structure and setting a tortuosity $\tau_2$ of a second active material layer forming a surface of the active material layer to be smaller than a tortuosity $\tau_1$ of a first active material layer on a negative electrode current collector side. Further, when the tortuosity of the active material layer and an amount of a Si-containing material added satisfy a predetermined requirement, a more remarkable improving effect is obtained.

Here, the tortuosity of the active material layer is an index indicating a degree of tortuousness of a space (pores) formed in the active material layer and through which an electrolyte liquid passes. A smaller tortuosity means less tortuousness of a pathway of the space. The tortuosity is a value of a distance (pathway length) from a start point to an end point in the space in the active material layer divided by a linear distance between the start point to the end point in the space in the active material layer. The linear distance may be approximated to a thickness of the active material layer. When the pathway length is equal to the average thickness of the active material layer, the tortuosity is 1.

The present inventors have ascertained that the high-rate characteristics of the battery is specifically improved, in a negative electrode adopting a multilayer structure having the tortuosity of an active material layer satisfying $\tau_2 < \tau_1$, by optimizing a relationship between the tortuosity of the active material layer and an amount of a Si-containing material added, and by setting the value B calculated with the Formula 2 to be greater than or equal to 1.7. A case where the value B is less than 1.7, for example, a case where the amount of the Si-containing material added is small causes a reaction of graphite to be rate-determining, and an effect by the electrode structure is considered to be small. Therefore, the effect of improving the high-rate characteristics is small even by adopting the multilayer structure.

Also, it is considered that move of ions in the active material layer is rate-determining without adopting the multilayer structure even when the amount of the Si-containing material added is increased to improve the reactivity of the active material, and the effect of improving the high-rate characteristics is small. That is, it is considered that adopting the multilayer structure in which the tortuosity of the negative electrode active material satisfies $\tau_2 < \tau_1$ and setting the value B calculated with Formula 2 to be greater than or equal to 1.7 yield a synergistic effect of increase in ion mobility and increase in reactivity of the active material, resulting in remarkable improvement of the high-rate characteristics of the battery.

Hereinafter, an example of embodiments of the negative electrode for a secondary battery according to the present disclosure and the secondary battery using this negative electrode will be described in detail with reference to the drawings. Note that the scope of the present disclosure includes a configuration composed of selective combination of constituents of a plurality of embodiments and modified examples described hereinafter.

Hereinafter, a cylindrical battery housing a wound electrode assembly 14 in a bottomed cylindrical exterior housing can 16 will be exemplified, but the exterior of the battery is not limited to the cylindrical exterior housing can. The secondary battery according to the present disclosure may be, for example, a rectangular battery comprising a rectangular exterior hosing can, a coin-shaped battery comprising a coin-shaped exterior housing can, or a laminate battery comprising an exterior composed of a laminate sheet including a metal layer and a resin layer. The electrode assembly is not limited to the wound electrode assembly, and may be a stacked electrode assembly in which a plurality of positive electrodes and a plurality of negative electrodes are alternately stacked via a separator.

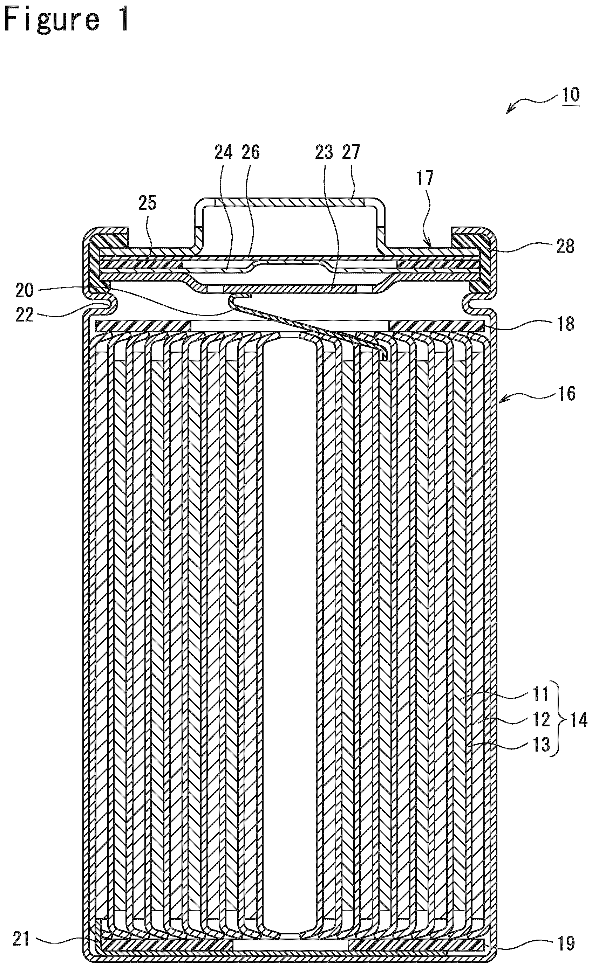

FIG. 1 is a sectional view of a secondary battery 10 of an example of an example of an embodiment. As illustrated in FIG. 1, the secondary battery 10 comprises the wound electrode assembly 14, an electrolyte, and the exterior housing can 16 housing the electrode assembly 14 and the electrolyte. The electrode assembly 14 has a positive electrode 11, a negative electrode 12, and a separator 13, and has a wound structure in which the positive electrode 11 and the negative electrode 12 are spirally wound via the separator 13. The exterior housing can 16 is a bottomed cylindrical metallic container having an opening on one side in an axial direction, and the opening of the exterior housing can 16 is sealed with a sealing assembly 17. Hereinafter, for convenience of description, the sealing assembly 17 side of the battery will be described as the upper side, and the bottom side of the exterior housing can 16 will be described as the lower side.

Although an aqueous electrolyte may be used for the electrolyte, a non-aqueous electrolyte is used in the present embodiment. The non-aqueous electrolyte includes a non-aqueous solvent and an electrolyte salt dissolved in the non-aqueous solvent. For the non-aqueous solvent, esters, ethers, nitriles, amides, a mixed solvent of two or more thereof, and the like are used, for example. The non-aqueous solvent may contain a halogen-substituted derivative in which hydrogen of these solvents is at least partially replaced with a halogen atom such as fluorine. An example of the non-aqueous solvent is ethylene carbonate (EC), ethyl methyl carbonate (EMC), dimethyl carbonate (DMC), a mixed solvent thereof, or the like. For the electrolyte salt, a lithium salt such as $LiPF_6$ is used, for example.

The positive electrode 11, the negative electrode 12, and the separator 13, which constitute the electrode assembly 14, are all a band-shaped elongated body, and spirally wound to be alternately stacked in a radial direction of the electrode assembly 14. To prevent precipitation of lithium, the negative electrode 12 is formed to be one size larger than the positive electrode 11. That is, the negative electrode 12 is formed to be longer than the positive electrode 11 in a longitudinal direction and a width direction (short direction). Two of the separator 13 are formed to be one size larger than at least the positive electrode 11, and disposed to sandwich the positive electrode 11, for example. For the separator 13, a porous sheet having an ion permeation property and an insulation property is used. The electrode assembly 14 has a positive electrode lead 20 connected to the positive electrode 11 by welding or the like and a negative electrode lead 21 connected to the negative electrode 12 by welding or the like.

Insulating plates 18 and 19 are disposed on the upper and lower sides of the electrode assembly 14, respectively. In the example illustrated in FIG. 1, the positive electrode lead 20 extends through a through hole of the insulating plate 18 toward the sealing assembly 17 side, and the negative electrode lead 21 extends through an outside of the insulating plate 19 toward the bottom side of the exterior housing can 16. The positive electrode lead 20 is connected to a lower surface of an internal terminal plate 23 of the sealing assembly 17 by welding or the like, and a cap 27, which is a top plate of the sealing assembly 17 electrically connected to the internal terminal plate 23, becomes a positive electrode terminal. The negative electrode lead 21 is connected to a bottom inner surface of the exterior housing can 16 by welding or the like, and the exterior housing can 16 becomes a negative electrode terminal.

A gasket 28 is provided between the exterior housing can 16 and the sealing assembly 17 to achieve sealability inside the battery. On the exterior housing can 16, a grooved portion 22 in which a part of a side wall thereof projects inward to support the sealing assembly 17 is formed. The grooved portion 22 is preferably formed in a circular shape along a circumferential direction of the exterior housing can 16, and supports the sealing assembly 17 with the upper face thereof. The sealing assembly 17 is fixed on the upper part of the exterior housing can 16 with the grooved portion 22 and with an end of the opening of the exterior housing can 16 caulked to the sealing assembly 17.

The sealing assembly 17 has a stacked structure of the internal terminal plate 23, a lower vent member 24, an insulating member 25, an upper vent member 26, and the cap 27 in this order from the electrode assembly 14 side. Each member constituting the sealing assembly 17 has, for example, a disk shape or a ring shape, and each member except for the insulating member 25 is electrically connected to each other. The lower vent member 24 and the upper vent member 26 are connected at each of central parts thereof, and the insulating member 25 is interposed between each of the circumferential parts. If the internal pressure of the battery increases due to abnormal heat generation, the lower vent member 24 is deformed so as to push the upper vent member 26 up toward the cap 27 side and breaks, and thereby a current pathway between the lower vent member 24 and the upper vent member 26 is cut off. If the internal pressure further increases, the upper vent member 26 breaks, and gas is discharged through an opening of the cap 27.

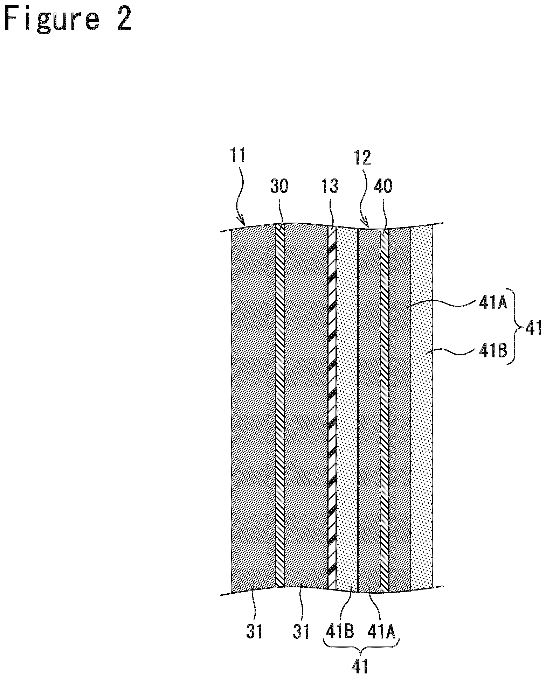

Hereinafter, the positive electrode 11, the negative electrode 12, and the separator 13, which constitute the electrode assembly 14, specifically the negative electrode 12, will be described in detail with reference to FIG. 2. FIG. 2 is a view schematically illustrating a part of a cross section of the electrode assembly 14.

[Positive Electrode]

As illustrated in FIG. 2, the positive electrode 11 comprises a positive electrode current collector 30 and a positive electrode active material layer 31 formed on the positive electrode current collector 30. For the positive electrode current collector 30, a foil of a metal stable within a potential range of the positive electrode 11, such as aluminum and an aluminum alloy, a film in which such a metal is disposed on a surface layer thereof, and the like may be used. The positive electrode active material layer 31 includes a positive electrode active material, a conductive agent, and a binder, and is preferably formed on both surfaces of the positive electrode current collector 30 except for an exposed portion to which the positive electrode lead 20 is to be connected. The positive electrode 11 may be produced by, for example, applying a positive electrode mixture slurry including the positive electrode active material, the conductive agent, the binder, and the like on the positive electrode current collector 30, and drying and subsequently compressing the coating film to form the positive electrode active material layer 31 on both surfaces of the positive electrode current collector 30.

The positive electrode active material layer 31 includes lithium-metal composite oxide particles as the positive electrode active material. The lithium-metal composite oxide is a composite oxide containing a metal element such as Co, Mn, Ni, and Al, other than Li. The metal element to constitute the lithium-metal composite oxide is, for example, at least one selected from the group consisting of Mg, Al, Ca, Sc, Ti, V, Cr, Mn, Fe, Co, Ni, Cu, Zn, Ga, Ge, Y, Zr, Sn, Sb, W, Pb, and Bi. Among these, at least one selected from the group consisting of Co, Ni, and Mn is preferably contained. A preferable example of the composite oxide is a lithium-metal composite oxide containing Ni, Co, and Mn, or a lithium-metal composite oxide containing Ni, Co, and Al.

Examples of the conductive agent included in the positive electrode active material layer 31 include carbon materials such as carbon black such as acetylene black and Ketjenblack, graphite, carbon nanotube, carbon nanofiber, and graphene. Examples of the binder included in the positive electrode active material layer 31 include fluorine-containing resins such as polytetrafluoroethylene (PTFE) and polyvinylidene fluoride (PVdF), polyacrylonitrile (PAN), a polyimide, an acrylic resin, and a polyolefin. With these resins, carboxymethylcellulose (CMC) or a salt thereof, polyethylene oxide (PEO), and the like may be used in combination.

[Negative Electrode]

As illustrated in FIG. 2, the negative electrode 12 comprises a negative electrode current collector 40 and a negative electrode active material layer 41 formed on the negative electrode current collector 40. For the negative electrode current collector 40, a foil of a metal stable within a potential range of the negative electrode 12, such as copper and a copper alloy, a film in which such a metal is disposed on a surface layer thereof, and the like may be used. The negative electrode active material layer 41 includes a negative electrode active material, a binder, and as necessary a conductive agent, and is preferably provided on both surfaces of the negative electrode current collector 40 except for a current collector exposed portion to which the negative electrode lead is to be connected. The negative electrode 12 may be produced by applying a negative electrode mixture slurry including the negative electrode active material, the binder, the conductive agent, and the like on a surface of the negative electrode current collector 40, and drying and subsequently compressing the coating film to form the negative electrode active material layer 41 on both surfaces of the negative electrode current collector 40.

The negative electrode active material layer 41 has a first active material layer 41A formed on the negative electrode current collector 40 and a second active material layer 41B formed above the negative electrode current collector 40 via the first active material layer 41A. The second active material layer 41B forms the outermost surface of the negative electrode active material layer 41. The first active material layer 41A and the second active material layer 41B are layers having tortuosity different from each other, and the tortuosity $\tau_2$ of the second active material layer 41B is smaller than the tortuosity $\tau_1$ of the first active material layer 41A. A relationship between the multilayer structure of the negative electrode active material layer 41 and the tortuosity is important for improving the high-rate characteristics, and contributes to reduction in moving resistance of ions.

The first active material layer 41A and the second active material layer 41B include graphite and a Si-containing material as the negative electrode active material. Use of graphite and the Si-containing material as the negative electrode active material in combination can improve the high-rate characteristics, and attempt to increase the capacity of the battery while keeping the good cycle characteristics. A content of the Si-containing material is limited in the relationship with the tortuosity of the negative electrode active material layer 41 such that the value B calculated with Formula 2 is greater than or equal to 1.7, but preferably greater than or equal to 1 mass%, more preferably greater than or equal to 3 mass%, and particularly preferably greater than or equal to 5 mass% relative to a mass of the negative electrode active material. An upper limit of the content of the Si-containing material is not particularly limited, but an example thereof is 25 mass% or 20 mass%.

The graphite may be any of artificial graphite such as massive artificial graphite (MAG) and graphitized mesophase-carbon microbead (MCMB); and natural graphite such as flake graphite, massive graphite, and amorphous graphite. The graphite is, for example, at least one selected from the group consisting of the artificial graphite and the natural graphite. The first active material layer 41A and the second active material layer 41B may include the same type of the graphite, or may include different graphite. Regulating the type and blending ratio of the graphite added into the first active material layer 41A and the second active material layer 41B may control the tortuosity ratio of the active material layers to be the target value.

A median diameter (D50) on a volumetric basis of the graphite is, for example, greater than or equal to 1 μm and less than or equal to 30 μm, and preferably greater than or equal to 5 μm and less than or equal to 25 μm. The D50 means a particle diameter at which a cumulative frequency is 50% from a smaller particle diameter side in a particle size distribution on a volumetric basis. The particle size distribution of the negative electrode active material may be measured by using a laser diffraction-type particle size distribution measuring device (for example, MT3000II, manufactured by MicrotracBEL Corp.) with water as a dispersion medium.

The Si-containing material may be any as long as it is a material containing Si, and an example thereof includes a silicon alloy, a silicon compound, and a composite material containing Si. The preferable composite material is composite particles including an ion-conductive layer and Si particles dispersed in the ion-conductive layer. On surfaces of the composite particles containing Si, a conductive layer may be formed. The ion-conductive layer is, for example, at least one selected from the group consisting of a silicon oxide phase, a silicate phase, and a carbon phase. The ion-conductive layer is a matrix phase constituted with aggregation of particles finer than the Si particles. The first active material layer 41A and the second active material layer 41B may include the same type of the Si-containing material, or may include different Si-containing materials.

An example of the Si-containing material is composite particles having a sea-island structure in which fine Si particles are substantially uniformly dispersed in an amorphous silicon oxide phase, and represented by the general formula $SiO_x$ (0<x≤2). The main component of the silicon oxide may be silicon dioxide. The content rate "x" of oxygen relative to silicon is, for example, 0.5≤x<2.0, and preferably 0.8≤x≤1.5. D50 of the composite particles is typically smaller than the D50 of the graphite. The D50 of the composite particles is, for example, greater than or equal to 1 $\mu$m and less than or equal to 15 $\mu$m.

Another example of the Si-containing material is composite particles having a sea-island structure in which fine Si particles are substantially uniformly dispersed in the silicate phase or the carbon phase. The silicate phase includes, for example, at least one selected from the group consisting of alkali metal elements and group II elements of the periodic table. The silicate phase may include at least one selected from the group consisting of B, Al, Zr, Nb, Ta, V, Y, Ti, P, Bi, Zn, Sn, Pb, Sb, Co, Er, F, W, and lanthanoids. The carbon phase may be a phase of amorphous carbon. The amorphous carbon is a carbon material having an average face spacing of a (002) face measured by X-ray diffraction of more than 0.34 nm.

The preferable silicate phase is a lithium silicate phase containing Li. When the composite particles including the lithium silicate phase is used, an irreversible capacity is reduced to obtain good initial charge-discharge efficiency. The lithium silicate phase is, for example, a phase of a composite oxide represented by the general formula $Li_{2z}SiO_{(2+z)}$ (0<z<2). The lithium silicate phase preferably does not include $Li_4SiO_4$ (Z=2). $Li_4SiO_4$, which is an unstable compound, reacts with water and exhibits alkalinity, and therefore may modify Si, resulting in deterioration of the charge-discharge capacity. The lithium silicate phase preferably contains $Li_2SiO_3$ (Z=1) or $Li_2Si_2O_5$ (Z=1/2) as a main component from the viewpoints of stability, productivity, Li-ion conductivity, and the like.

The conductive layer formed on the surfaces of the composite particles is, for example, a carbon coating composed of a conductive carbon material. For the conductive carbon material, carbon black such as acetylene black and Ketjenblack, graphite, amorphous carbon with low crystallinity, and the like may be used. A thickness of the conductive layer is preferably greater than or equal to 1 nm and less than or equal to 200 nm, or greater than or equal to 5 nm and less than or equal to 100 nm with considering achievement of the conductivity and diffusibility of lithium ions toward particle insides. A thickness of the conductive layer may be measured by sectional observation of the composite particles using a scanning electron microscope (SEM) or a transmission electron microscope (TEM).

For the binder included in the negative electrode active material layer 41, a fluororesin, PAN, a polyimide, an acrylic resin, a polyolefin, and the like may be used as in the case of the positive electrode 11, but styrene-butadiene rubber (SBR) is preferably used. The negative electrode active material layer 41 preferably includes CMC or a salt thereof, polyacrylic acid (PAA) or a salt thereof, polyvinyl alcohol (PVA), and the like. Among these, SBR; and CMC or a salt thereof, or PAA or a salt thereof are preferably used in combination. A content of the binder is, for example, greater than or equal to 0.1 mass% and less than or equal to 5 mass% relative to the mass of the negative electrode active material layer 41. The first active material layer 41A and the second active material layer 41B may include the same type of the binder, or may include different binder.

The negative electrode active material layer 41 may include a conductive agent. For the conductive agent, a carbon material other than the graphite used as the negative electrode active material is used, for example. Adding the conductive agent in the negative electrode active material layer 41 may inhibit generation of active material particles isolated from a conductive path, and the effect of improving the battery characteristics such as the high-rate characteristics and cycle characteristics becomes more remarkable. A content of the conductive agent is preferably greater than or equal to 0.05 mass% and less than or equal to 5 mass%, and more preferably greater than or equal to 0.1 mass% and less than or equal to 3 mass% relative to the mass of the negative electrode active material layer 41. The first active material layer 41A and the second active material layer 41B may include the same type of the carbon material, or may include different types of the carbon material as the conductive agent.

The conductive agent included in the negative electrode active material layer 41 may be any of a particle carbon material such as carbon black and a fiber carbon material such as carbon nanotube (CNT), or the particle carbon material and the fiber carbon material may be used in combination. Among these, CNT is preferably used. Since CNT can exhibit good conductivity with addition at a small amount, CNT contributes to increase in the capacity of the battery, and also contributes to improvement of the high-rate characteristics.

CNT may be any of single-wall CNT (SWCNT) and multiwall CNT (MWCNT). For MWCNT, CNT with a tubular structure in which graphene sheets composed of six-membered carbon rings are wound parallel to the fiber axis, CNT with a platelet structure in which graphene sheets composed of six-membered carbon rings are arranged perpendicular to the fiber axis, CNT with a herringbone structure in which graphene sheets composed of six-membered carbon rings are wound with an oblique angle to the fiber axis, and the like may be used, for example.

An average diameter of CNT is, for example, less than or equal to 50 nm, preferably less than or equal to 40 nm, and more preferably less than or equal to 25 nm. A lower limit of the average diameter of CNT is not particularly limited, and is 1 nm, for example. An average fiber length of CNT is, for example, greater than or equal to 0.5 $\mu$m, more preferably greater than or equal to 0.7 $\mu$m, and more preferably greater than or equal to 0.8 $\mu$m. An upper limit of the average fiber length of CNT is not particularly limited, and 10 $\mu$m, for example.

As noted above, the negative electrode active material layer 41 has the multilayer structure including the first active material layer 41A being a lower layer and the second active material layer 41B being an upper layer, and the tortuosity $\tau_2$ of the second active material layer 41B is smaller than the tortuosity $\tau_1$ of the first active material layer 41A. If

the ratio $(\tau_2/\tau_1)$ of the tortuosity of the layers is greater than or equal to 1, permeability of the electrolyte liquid in the negative electrode active material layer 41 is deteriorated to deteriorate the high-rate characteristics. Although the negative electrode active material layer 41 preferably has the bilayer structure composed of the first active material layer 41A and the second active material layer 41B, the negative electrode active material layer 41 may have a third active material layer within a range not impairing the object of the present disclosure. In addition, a layer other than the active material layers may be formed on/above the negative electrode current collector 40. An example of the other layer is a protective layer including an inorganic filler, a conductive agent, and a binder.

The tortuosity $\tau$ of the negative electrode active material layer 41 herein is calculated with the following formula. "f" represents a pathway length though which Medial Axis penetrating faces opposite to each other in the thickness direction (hereinafter, abbreviated as "pathway length"), and "s" represents a length of a straight line between a start point and an end point of each pathway (hereinafter, abbreviated as "linear distance of end-start points"). Used for "f" and "s" are average values of the pathway length and the linear distance determined on a plurality of pathways. The tortuosity is evaluated by using the negative electrode 12 in a fully discharged state.

$$\tau = f/s$$

The tortuosity of the first active material layer 41A and the second active material layer 41B may be calculated with the following formulae.

$$\tau_1 = f_1/s_1$$

(fi: a pathway length in the first active material layer; si: a linear distance of end-start points in the first active material layer)

$$\tau_2 = f_2/s_2$$

($f_2$: a pathway length in the second active material layer; $s_2$: a linear distance of end-start points in the second active material layer)

The pathway length and the linear distance are determined by sectional observation and image analysis of the active material layer using a 3D scanning electron microscope (3DSEM, for example Ethos NX-5000, manufactured by Hitachi High-Tech Corporation).

The specific calculation method of the tortuosity is as follows.

(1) Construction of Three-Dimensional Structure of Negative Electrode Active Material Layer 41

The negative electrode active material layer 41 is placed on a sample table of the 3DSEM to alternately perform continuous sectional slicing and sectional observation. The observation is performed at an acceleration voltage of 5 kV. The obtained two-dimensional continuous images are subjected to an image binarization process with a three-dimensional image analysis software (for example, EX FACT VR, manufactured by Nihon Visual Science, Inc.), and these images are combined to construct a three-dimensional structure. A size of the three-dimensional structure is preferably greater than or equal to 100 $\mu$m $\times$ 100 $\mu$m $\times$ 100 $\mu$m.

(2) Determination of Boundary between First Active Material Layer 41A and Second Active Material Layer 41B

From the three-dimensional structure image obtained in the (1), a boundary of regions with different spaces in the thickness direction is determined as a boundary line between the first active material layer 41A and the second active material layer 41B.

(3) Determination of Pathway Lengths (f, $f_1$, and $f_2$)

The image of the three-dimensional structure obtained in the (1) was divided into the first active material layer 41A and the second active material layer 41B with the boundary line determined in the (2), and the space extracted by the binarization is thinned to determine an axis passing through a center of the space (Medeial Axis). The Medial Axis present in a cube and penetrating the surface of the negative electrode current collector 40 in the vertical direction was extracted, and the shortest pathway of one branched pathway was determined as the pathway length.

(4) Calculation of Tortuosity ($\tau$, $\tau_1$, and $\tau_2$)

An average value of the pathway lengths determined in the (3) and an average value of the linear distances between start and end points of each pathway are used to calculate the tortuosity of the active material layer with the formulae.

The ratio ($\tau_2/\tau_1$) of the tortuosity $\tau_2$ of the second active material layer 41B to the tortuosity $\tau_1$ of the first active material layer 41A is preferably greater than or equal to 0.3, and more preferably greater than or equal to 0.5. An example of the preferable range of the ratio ($\tau_2/\tau_1$) of the tortuosity is $0.3 \leq (\tau_2/\tau_1) < 1.0$, more preferably $0.5 \leq (\tau_2/\tau_1) < 1.0$, and particularly preferably $0.5 \leq (\tau_2/\tau_1) < 0.98$. When the tortuosity ratio between the first active material layer 41A and the second active material layer 41B satisfies the above relationship, the effect of improving the high-rate characteristics becomes more remarkable. The tortuosity $\tau$ of the negative electrode active material layer 41 is not particularly limited, and an example thereof is greater than or equal to 1.5 and less than or equal to 5.0, and preferably greater than or equal to 2.0 and less than or equal to 3.5.

As for thicknesses of the first active material layer 41A and the second active material layer 41B, the thickness of the second active material layer 41B may be larger than the thickness of the first active material layer 41A, but the thickness of the second active material layer 41B is preferably same as the thickness of the first active material layer 41A or smaller than the thickness of the first active material layer 41A. The thickness of the first active material layer 41A preferably accounts for greater than or equal to 50% and less than or equal to 80%, and may be greater than or equal to 60% and less than or equal to 80% of the thickness of the negative electrode active material layer 41. The thickness of the second active material layer 41B preferably accounts for greater than or equal to 20% and less than or equal to 50%, and may be greater than or equal to 20% and less than or equal to 40% of the thickness of the negative electrode active material layer 41. When the thickness of each of the active material layers is within the above range, the effect of improving the high-rate characteristics becomes more remarkable.

The thickness of the negative electrode active material layer 41 is, for example, greater than or equal to 60 $\mu$m and less than or equal to 150 $\mu$m, and preferably greater than or equal to 70 $\mu$m and less than or equal to 120 $\mu$m on one side of the negative electrode current collector 40. The thickness of the active material layer is determined by sectional observation of the active material layer using an SEM. The thickness of each of the active material layers is substantially uniform, and means herein an average value of the thicknesses.

A filling density of the negative electrode active material layer 41 is, for example, greater than or equal to 1.2 g/cc, and preferably greater than or equal to 1.3. An upper limit of the filling density of the negative electrode active material layer 41 is not particularly limited, and an example thereof is 1.7 g/cc. The filling density of the negative electrode active material layer 41 within the above range can achieve the secondary battery 10 having a high energy density. The filling densities of the first active material layer 41A and the second active material layer 41B are not particularly limited and may be any as long as the filling density is within the above range as an entirety of the negative electrode active material layer 41, but the filling density of the first active material layer 41A is typically larger than the filling density of the second active material layer 41B.

Constitution materials of the first active material layer 41A and the second active material layer 41B may be the same as or different from each other as long as the ratio of the tortuosity ($\tau_2/\tau_1$) can be controlled within the target range. For example, changing a compressive force in a rolling step of each of the active material layers can control the ratio of the tortuosity ($\tau_2/\tau_1$) within the target range. Specifically, the first active material layer 41A is formed on the surface of the negative electrode current collector 40, a first rolling step is performed, then the second active material layer 41B is formed on the first active material layer 41A, and a second rolling step is performed. In this case, a compressive force in the second rolling step is set to be smaller than a compressive force in the first rolling step.

Examples of a method for controlling the ratio of the tortuosity ($\tau_2/\tau_1$) within the target range include: a method of changing the compressive force in the rolling step of each of the active material layers; and separately thereto or in addition thereto, a method of changing at least one of the type and blending ratio of the negative electrode active material in each of the active material layers. For example, artificial graphite may be added into one of the first active material layer 41A and the second active material layer 41B, and natural graphite may be added into the other. Alternatively, artificial graphite and natural graphite may be added into each of the active material layers, and the blending ratios thereof may be changed in each of the active material layers. The ratio of the tortuosity ($\tau_2/\tau_1$) may also be controlled within the target range by regulating a blending ratio of two types of graphite having different D50.

In the negative electrode 12, a value B calculated with the following Formula 2 by using: a content rate of the Si-containing material relative to the mass of the negative electrode active material in the entirety of the negative electrode active material layer 41 (the mass proportion of the Si-containing material relative to the mass of the entirety of the active material (for example: graphite + Si-containing material) being 1); and a value A calculated with the following Formula 1, is greater than or equal to 1.7.

the tortuosity $\tau$ of the negative electrode active material layer 41 $\times$ the thickness of

EP 4 471 890 A1

the content rate of the Si-containing material relative to the mass of the negative

When the value B in the negative electrode active material layer 41 is greater than or equal to 1.7, a synergistic effect of improvement of ion mobility and improvement of reactivity of the active material is obtained to specifically improve the high-rate characteristics of the battery. If the value B is less than 1.7, for example, the reaction of graphite is considered to be rate-determining, and the effect of improving the high-rate characteristics is limitative even when the above multilayer structure is adopted. Note that the thickness of the negative electrode active material layer 41 in the Formula 1 means the thickness of the active material layer on one side of the negative electrode active material layer 41 even when the negative electrode active material layer 41 is formed on both surfaces of the negative electrode current collector 40.

The value A calculated with the Formula 1 is substantially equal to the pathway length "f" in the calculation formula for determining the tortuosity $\tau$, and in the Formula 2, the pathway length "f" may also be used instead of the value A. The value A is not particularly limited but necessarily a small value when the content rate of the Si-containing material is low, and limited by the relationship with the content rate of the Si-containing material. An example of the value A is greater than or equal to 0.01 cm and less than or equal to 0.05 cm, and preferably greater than or equal to 0.02 cm and less than or equal to 0.04 cm.

The value B calculated with the Formula 2 is, for example, 0.05 / the value A when the content rate of the Si-containing material relative to the mass of the negative electrode active material is 5 mass% (the Si content rate = 0.05). Since the negative electrode 12 includes graphite and the Si-containing material as the negative electrode active material, the upper limit of the value B is less than 1 / the value A. The value B may be any as long as it is greater than or equal to 1.7 and not particularly limited from the viewpoint of improvement of the high-rate characteristics, but an example of the upper limit is 20, and preferably 10.

The value B is more preferably greater than or equal to 1.8, and particularly preferably greater than or equal to 1.9. In this case, the effect of improving the high-rate characteristics becomes more remarkable. An example of the preferable range of the value B is greater than or equal to 1.8 and less than or equal to 20, and more preferably greater than or equal to 1.9 and less than or equal to 10.

[Separator]

For the separator 13, a porous sheet having an ion permeation property and an insulation property is used. Specific examples of the porous sheet include a fine porous thin film, a woven fabric, and a nonwoven fabric. As a material of the separator 13, a polyolefin such as polyethylene and polypropylene, cellulose, and the like are preferable. The separator 13 may have a single-layer structure or a multilayer structure. On a surface of the separator 13, a resin layer having high heat resistance, such as an aramid resin, may be formed.

On an interface between the separator 13 and at least one of the positive electrode 11 and the negative electrode 12, a filler layer including an inorganic filler may be formed. Examples of the inorganic filler include an oxide, a phosphate compound, and the like that contain metal elements such as Ti, Al, Si, and Mg. The filler layer may be formed by applying a slurry containing the filler on the surface of the positive electrode 11, the negative electrode 12, or the separator 13.

EXAMPLES

Hereinafter, the present disclosure will be further described with Examples, but the present disclosure is not limited to these Examples.

<Example 1>

[Production of Positive Electrode]

As a positive electrode active material, a lithium-transition metal composite oxide represented by the general formula $LiNi_{0.82}Co_{0.15}Al_{0.03}O_2$ was used. The positive electrode active material, acetylene black, and polyvinylidene fluoride were mixed at a solid-content mass ratio of 100:1:1, and N-methyl-2-pyrrolidone (NMP) was used as a dispersion medium to prepare a positive electrode mixture slurry. Then, the positive electrode mixture slurry was applied on both surfaces of a positive electrode current collector composed of aluminum foil, and the coating film was dried and compressed by using a roller. Thereafter, the positive electrode current collector was cut to a stripe shape to obtain a positive electrode in which a positive electrode active material layer was formed on both surfaces of the positive electrode current collector.

9

**EP 4 471 890 A1**

[Production of Negative Electrode]

As a negative electrode active material, a mixture of graphite and a Si-containing material represented by SiOx (X=1) was used. For the graphite, a mixture of natural graphite and artificial graphite was used. The negative electrode active material, a dispersion of styrene-butadiene rubber (SBR), and a sodium salt of carboxymethylcellulose were mixed at solid-content mass ratio of 100:1:1, and water was used as a dispersion medium to prepare a negative electrode mixture slurry. Note that prepared were two types of first and second negative electrode mixture slurries in which blending ratios between the natural graphite and the artificial graphite are different from each other.

The first negative electrode mixture slurry was applied on both surfaces of a negative electrode current collector composed of copper foil, the first coating film was dried, and then the first coating film was compressed by using a roller. Subsequently, the second negative electrode mixture slurry was applied on the first coating film, the second coating film was formed and dried, and then the first and second coating films were compressed by using a roller. The negative electrode current collector was cut to a stripe shape to obtain a negative electrode in which a negative electrode active material layer was formed on both surfaces of the negative electrode current collector.

The active material layer of the obtained negative electrode had a multilayer (bilayer) structure, a tortuosity of 2.68, a thickness of 101 $\mu$m on one side of the current collector, and a filling density of 1.6 g/cc. A ratio of the tortuosity ($\tau_2/\tau_1$) of the first and second active material layers was 0.93, and a ratio of the thickness was 50:50. Table 1 shows the properties of the negative electrode.

[Preparation of Non-Aqueous Electrolyte Liquid]

Ethylene carbonate and diethyl carbonate were mixed at a volume ratio of 1:1, and then fluoroethylene carbonate was added so that the concentration was 2 mass%. Into this mixed solvent, LiPF$_6$ was added so that the concentration was 1 mol/L to obtain a non-aqueous electrolyte liquid.

[Production of Test Cell]

The above positive electrode to which a lead made of aluminum was welded and the above negative electrode to which a lead made of nickel was welded were spirally wound via a separator to produce a wound electrode assembly. This electrode assembly was housed in a bottomed cylindrical exterior hosing can with 18 mm in diameter and 65 mm in height, the above non-aqueous electrolyte liquid was injected, and then an opening of the exterior hosing can was sealed with a sealing assembly via a gasket to obtain a test cell (non-aqueous electrolyte secondary battery).

<Examples 2 to 4 and Comparative Example 3>

Test cells were produced in the same manner as in Example 1 except that, in the production of the negative electrode, at least any one of the blending ratio between the natural graphite and the artificial graphite, the compressive force in the rolling step of each of the active material layers, and the content rate of the Si-containing material (blending ratio between the graphite and the Si-containing material) was changed so that the tortuosity of the first and second active material layers, the ratio of the tortuosity ($\tau_2/\tau_1$), the value A, and the value B were values shown in Table 1.

<Examples 5 to 10 and Comparative Examples 1 and 2>

Test cells were produced in the same manner as in Example 1 except that, in the production of the negative electrode, the ratio of the thickness of the first and second active material layers was changed to 75:25, and further, at least any one of the blending ratio between the natural graphite and the artificial graphite, the compressive force in the rolling step of each of the active material layers, and the content rate of the Si-containing material was changed so that the tortuosity of the first and second active material layers, the ratio of the tortuosity ($\tau_2/\tau_1$), the value A, and the value B were values shown in Table 1.

<Comparative Examples 4 to 6>

Test cells were produced in the same manner as in Example 1 except that, in the production of the negative electrode, the negative electrode active material layer having a single-layer structure was formed, and at least any one of the blending ratio between the natural graphite and the artificial graphite, and the content rate of the Si-containing material was changed so that the tortuosity of the active material layers, the value A, and the value B were values shown in Table 1.

[Evaluation of High-Rate Characteristics (Measurement of 2.0 C / 0.05 C Discharge Capacity Retention)]

Each of the produced test cells was charged at a constant current of 0.05 C until a battery voltage reached 4.2 V. Thereafter, the test cell was discharged at a constant current of 0.05 C until the battery voltage reached 2.5 V. A ratio of a discharge capacity where the current value during charge and discharge relative to the discharge capacity at this time was changed to 2.0 C (discharge capacity retention) was determined with the following formula. Table 1 shows the evaluation results.

Capacity retention (%) = (2.0-C discharge capacity / 0.05-C discharge capacity) $\times$ 100

[Table 1]

| | Electrode plate structure | Tortuosity | Tortuosity ratio ($\tau_2/\tau_1$) | Thickness ratio (%) | | Value A (cm) | Value B (cm$^{-1}$) | Capacity retention (%) |
| --- | --- | --- | --- | --- | --- | --- | --- | --- |
| | | | | First layer | Second layer | | | |
| Example 1 | Multilayer | 2.68 | 0.93 | 50 | 50 | 0.027 | 2.01 | 84.5 |
| Example 2 | Multilayer | 2.88 | 0.95 | 50 | 50 | 0.028 | 1.99 | 88.6 |
| Example 3 | Multilayer | 3.07 | 0.87 | 50 | 50 | 0.029 | 1.91 | 87.1 |
| Example 4 | Multilayer | 3.33 | 0.95 | 50 | 50 | 0.030 | 1.82 | 84.0 |
| Example 5 | Multilayer | 2.46 | 0.93 | 75 | 25 | 0.025 | 2.22 | 89.8 |
| Example 6 | Multilayer | 2.49 | 0.91 | 75 | 25 | 0.024 | 2.30 | 90.3 |
| Example 7 | Multilayer | 2.85 | 0.83 | 75 | 25 | 0.028 | 1.95 | 86.2 |
| Example 8 | Multilayer | 3.24 | 0.67 | 75 | 25 | 0.030 | 1.84 | 82.9 |
| Example 9 | Multilayer | 2.32 | 0.96 | 75 | 25 | 0.023 | 3.49 | 92.2 |
| Example 10 | Multilayer | 2.89 | 0.51 | 75 | 25 | 0.025 | 3.15 | 89.7 |
| Comparative Example 1 | Multilayer | 2.83 | 0.63 | 75 | 25 | 0.030 | 1.01 | 73.0 |
| Comparative Example 2 | Multilayer | 2.82 | 0.73 | 75 | 25 | 0.028 | 1.06 | 75.2 |
| Comparative Example 3 | Multilayer | 2.50 | 1.05 | 50 | 50 | 0.032 | 3.14 | 78.6 |
| Comparative Example 4 | Single layer | 3.02 | 1.00 | - | - | 0.027 | 2.02 | 76.6 |
| Comparative Example 5 | Single layer | 2.31 | 1.00 | - | - | 0.027 | 1.11 | 72.3 |
| Comparative Example 6 | Single layer | 2.91 | 1.00 | - | - | 0.045 | 1.80 | 74.8 |

As shown in Table 1, all of the test cells of the Examples have the high 2.0 C / 0.05 C discharge capacity retention compared with the test cells of Comparative Examples, resulting in the excellent high-rate characteristics. From the results shown in Table 1, it is understood that the high-rate characteristics of the battery are specifically improved when the negative electrode active material layer has the multilayer structure having a tortuosity ratio ($\tau_2/\tau_1$) of less than 1 and when the value B calculated with the Formula 2 is greater than or equal to 1.7.
In contrast, a case where the negative electrode active material layer has the single-layer structure even with the value B of greater than or equal to 1.7 (Comparative Examples 4 and 6) and a case where the tortuosity ratio ($\tau_2/\tau_1$) is greater than or equal to 1 even with the multilayer structure, the 2.0 C / 0.05 C discharge capacity retention is considerably deteriorated. A case where the value B is less than 1.7 even when the negative electrode active material layer has the multilayer structure having a tortuosity ratio ($\tau_2/\tau_1$) of less than 1 (Comparative Examples 1 and 2), the 2.0 C / 0.05 C discharge capacity retention is also considerably deteriorated.

## EP 4 471 890 A1

REFERENCE SIGNS LIST

10 secondary battery, 11 positive electrode, 12 negative electrode, 13 separator, 14 electrode assembly, 16 exterior housing can, 17 sealing assembly, 18, 19 insulating plate, 20 positive electrode lead, 21 negative electrode lead, 22 grooved portion, 23 internal terminal plate, 24 lower vent member, 25 insulating member, 26 upper vent member, 27 cap, 28 gasket, 30 positive electrode current collector, 31 positive electrode active material layer, 40 negative electrode current collector, 41 negative electrode active material layer, 41A first active material layer, 41B second active material layer

## Claims

1.  A negative electrode for a secondary battery, comprising:

    a current collector; and
    an active material layer formed on the current collector, wherein the active material layer has:

       a first active material layer formed on the current collector; and
       a second active material layer formed above the current collector via the first active material layer,
       the first active material layer and the second active material layer include graphite and a Si-containing material as an active material,
       a tortuosity $\tau_2$ of the second active material layer is smaller than a tortuosity $\tau_1$ of the first active material layer, and
       a value B calculated with the following Formula 2 by using: a content rate of the Si-containing material relative to a mass of the active material; and a value A calculated with the following Formula 1, is greater than or equal to 1.7, the tortuosity of the active material layer $\times$ a thickness of the active material the content rate of the Si-containing material relative to the mass of the active material / the value A = the value B

2.  The negative electrode for a secondary battery according to claim 1, wherein the value B is greater than or equal to 1.9.

3.  The negative electrode for a secondary battery according to claim 1 or 2, wherein a ratio $(\tau_2/\tau_1)$ of the tortuosity $\tau_2$ to the tortuosity $\tau_2$ satisfies $0.3 \leq (\tau_2/\tau_1) < 1$.

4.  The negative electrode for a secondary battery according to any one of claims 1 to 3, wherein

    a thickness of the first active material layer accounts for greater than or equal to 50% and less than or equal to 80% of the thickness of the active material layer, and
    a thickness of the second active material layer accounts for greater than or equal to 20% and less than or equal to 50% of the thickness of the active material layer.

5.  The negative electrode for a secondary battery according to any one of claims 1 to 4, wherein the first active material layer and the second active material layer include a carbon material other than the graphite as a conductive agent.

6.  A secondary battery, comprising:

    the negative electrode for a secondary battery according to any one of claims 1 to 5;
    a positive electrode; and
    an electrolyte.

# Figure 1

Figure 2

## INTERNATIONAL SEARCH REPORT

International application No.

**PCT/JP2023/000414**

### A. CLASSIFICATION OF SUBJECT MATTER

*H01M 4/133*(2010.01)i; *H01M 4/36*(2006.01)i; *H01M 4/38*(2006.01)i; *H01M 4/587*(2010.01)i; *H01M 4/62*(2006.01)i
FI: H01M4/133; H01M4/587; H01M4/38 Z; H01M4/36 E; H01M4/62 Z

According to International Patent Classification (IPC) or to both national classification and IPC

### B. FIELDS SEARCHED

Minimum documentation searched (classification system followed by classification symbols)

H01M4/133; H01M4/36; H01M4/38; H01M4/587; H01M4/62

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2008-251249 A (TDK CORP.) 16 October 2008 (2008-10-16) | 1-6 |
| A | WO 2020/026914 A1 (MURATA MANUFACTURING CO., LTD.) 06 February 2020 (2020-02-06) | 1-6 |
| A | JP 2015-41434 A (SUMIKA CHEMICAL ANALYSIS SERVICE, LTD.) 02 March 2015 (2015-03-02) | 1-6 |
| A | WO 2020/195055 A1 (PANASONIC INTELLECTUAL PROPERTY MANAGEMENT CO., LTD.) 01 October 2020 (2020-10-01) | 1-6 |
| A | WO 2021/117550 A1 (PANASONIC INTELLECTUAL PROPERTY MANAGEMENT CO., LTD.) 17 June 2021 (2021-06-17) | 1-6 |

☐ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **21 February 2023** | **07 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

International application No.

**PCT/JP2023/000414**

| Patent document cited in search report | | | Publication date (day/month/year) | Patent family member(s) | | | Publication date (day/month/year) |
|---|---|---|---|---|---|---|---|
| JP | 2008-251249 | A | 16 October 2008 | US | 2008/0241685 | A1 | |
| | | | | CN | 101276900 | A | |
| WO | 2020/026914 | A1 | 06 February 2020 | US | 2021/0159501 | A1 | |
| | | | | CN | 112514130 | A | |
| JP | 2015-41434 | A | 02 March 2015 | (Family: none) | | | |
| WO | 2020/195055 | A1 | 01 October 2020 | US | 2022/0166004 | A1 | |
| | | | | EP | 3951918 | A1 | |
| | | | | CN | 113632256 | A | |
| WO | 2021/117550 | A1 | 17 June 2021 | EP | 4075541 | A1 | |
| | | | | CN | 114830391 | A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019003835 A